# EUROPEAN PATENT APPLICATION

(11) **EP 3 998 154 A1**
(43) Date of publication of application: **18.05.2022**
(21) Application number: 20740354.4
(22) Date of filing: 29.06.2020
(51) Int. Cl.: B32B 3/26, B32B 3/06, B32B 9/04, B32B 27/30, B32B 29/00, E04F 15/10, E04F 15/02, E04F 13/08, E04F 13/18

(54) **PLATE AND SYSTEM FOR COVERING VERTICAL AND HORIZONTAL SURFACES**

(30) Priority: 10.07.2019 ES 201931180 U
(71) Applicant: Euro Trade Flooring, S.L., 08635 Sant Esteve Sesrovires (Barcelona) (ES)
(72) Inventor: GRANADOS PELAEZ, David, 08840 VILADECANS (ES); FERNANDEZ LOPEZ, Luis, 08040 BARCELONA (ES)
(74) Representative: Sugrañes, S.L.P.
(86) International application number: PCT/ES2020/070414
(87) International publication number: WO 2021/005252

(57) **Abstract**

The invention relates to a covering plate (1) comprising: an outer decorative layer (2), a support layer (3) comprising magnesium oxide or magnesium oxide with perlite and/or vermiculite and/or cellulose, a layer of foam material (4) with an adhesive surface (5) and a plurality of perforations (6) and a barrier membrane (7) between the support layer and the layer of foam material. The support layer has a first thickness (31), after the decorative layer, with a greater density than the density in a second thickness (32) between the first thickness and the barrier membrane. The support layer is provided with a reinforcement structure (8) made up of meshes or a fabric, located within the second thickness. The invention also relates to a system comprising the covering plate.

## Description

### Technical field of the invention

The present invention relates to a covering plate for covering horizontal surfaces, such as floors or floor coverings, and vertical surfaces such as walls. The covering plate is a multilayer plate comprising a decorative layer provided with decorative motifs visible from the outside, a support layer comprising magnesium oxide, and a layer of foam material with an adhesive surface intended to be placed on the vertical or horizontal surface to be covered.

The invention also relates to a system for covering vertical and horizontal surfaces comprising a plurality of the covering plates of the invention.

### Background of the invention

Patent document EP2960397-A1 discloses a multilayer covering plate for essentially horizontal support surfaces such as floors or floor coverings, comprising a ductile or flexible upper decorative layer, followed by a main layer made of a rigid or semi-rigid material comprising magnesium oxide, fibre cement or mortar with perlite and vermiculite, and finally a continuous and flexible support layer made of polyvinyl chloride (PVC) or a wood-plastic composite material (WPC), intended to be placed on the support surface.

The materials considered in the main layer, in addition to providing solidity to the plate, provide high dimensional stability, since the layer does not swell nor do the dimensions thereof vary in moist environments, especially when it is a layer comprising magnesium oxide. Furthermore, they have excellent expansion and contraction coefficients when tested under real temperature conditions to which the coverings for floors and walls are subjected.

In general, self-adhesive coverings intended for covering floors are not suitable for wall surfaces, since they often have irregularities such as tile joints, unevenness between gypsum boards and various imperfections that the vinyl covering reproduces when these irregularities are noticeable on the plate, producing a poor aesthetic result. In order to solve this problem, the applicant developed a new covering plate wherein after the main layer there is a layer of foam material with an adhesive surface, intended to be placed on the surface to be covered. Furthermore, this layer of self-adhesive foam material has the particularity that it is provided with a plurality of perforations which penetrate from the adhesive surface into the layer of foam material. The perforations enable the user or the operator who has to apply the covering on the wall to fill in said perforations with silicone, glue, or with a similar material which reinforces the adhesive capacity of the covering to the surface of the wall, being added to the effects of the adhesive itself which is already provided on the outer surface of the layer of foam material. Furthermore, the perforations are already an indication for the user or operator of where to apply the silicone or similar product, for which reason no mistakes are made in this task.

Although the plate described above has good results covering both horizontal and vertical surfaces, it so happens that the main layer, when it comprises magnesium oxide, has a certain permeability and absorbs moisture that may come from the walls to be covered. It can absorb up to approximately 10% of water, which does not destabilise the main layer but causes the water to reach then the adjacent layers or maintains the moisture level, thus the quality of the other layers can be deteriorated and even damp spots that are visible on the visible face of the covering may appear. Maintaining a continuous moisture level in the plates can be very harmful, not only from an aesthetic or functional point of view, but it can also generate mould, unpleasant odours and unhealthy conditions in different environments.

It has also been observed in practice that the bonding of the main layer which comprises magnesium oxide to the decorative layer is not always equally effective, since in certain situations, the decorative layer, when comprising polyvinyl chloride (PVC), such as the case of luxury vinyl tiles or floors that are known in English as luxury vinyl tiles (LVT), curves because it is very sensitive to temperature variations (shrinkage/expansion) and this bending can even be transmitted to the main layer, undermining some of the initial benefits thereof and the decorative layer can eventually come loose from the main layer.

Furthermore, it is known that in the placement of plates next to others, a small separation distance must be left between the lateral edge of a plate and the lateral edge of the adjacent one, which is known as the joint, and a bead of sealing material, such as silicone, is arranged in order to protect the surface to be covered from moisture that may come from the outside (from the room wherein the surface to be covered is located or even when the covered surface is cleaned with liquid materials). Despite the improved adaptation to the irregularities that the surface of the wall or the floor to be covered can have due to the layer of foam material of the plate described previously, sometimes the existence of these irregularities becomes visible in the joints between plates, since uniformity cannot be ensured in the appearance of all silicone beads, resulting in some which are wider than others, which can indicate discontinuous changes in level of the visible face from one plate to the next. This is especially evident when cleaning the covered surface, since the discontinuities between the plates can be felt when touched.

### Description of the invention

In order to provide a solution to the drawbacks raised, this patent discloses a covering plate for covering horizontal and vertical surfaces, comprising at least the following layers arranged in order, from the visible face intended to be exposed to the outside to the hidden face intended to be oriented towards the surface to be covered:
- an outer decorative layer;
- a support layer comprising at least magnesium oxide or magnesium oxide with perlite and/or vermiculite and/or cellulose; and
- a layer of foam material with an adhesive surface, intended to be placed on the surface to be covered, provided with a plurality of perforations.

Essentially, the covering plate is characterised in that it comprises a barrier membrane or layer for reducing or preventing water and moisture intrusion, arranged between the support layer and the layer of foam material. It is also characterised in that the support layer has a non-homogeneous density in the thickness thereof, distinguishing a first thickness, after the decorative layer, and a second thickness, between the first thickness and the barrier membrane or layer, wherein the density of the support layer in the first thickness is greater than the density in the second thickness. Furthermore, the support layer is provided with a reinforcement structure which is made up of meshes or a fabric, said reinforcement structure being located within the second thickness of the support layer.

The barrier membrane or layer which helps prevent water and moisture intrusion, arranged between the support layer and the layer of foam material, prevents the water and moisture from reaching the support layer that comprises magnesium oxide, thus preventing moisture from the surface to be covered (wall or floor) from being absorbed by the support layer and causing adverse effects in the rest of the layers.

The average density of the support layer including magnesium oxide among the components thereof is in the order of 1050 Kg/m³. However, the support layer does not have a homogeneous density, since the manufacturing process thereof results in a layer wherein approximately half of the total thickness thereof has a density different than the other half of the total thickness. This difference in density is favourable for achieving an equilibrium between the different layers that make up the covering plate, aiming for a transition of densities from a higher value in the decorative layer to a lower value in the layer of foam material.

Magnesium oxide particles are smaller and heavier than most of the other components making up the support layer. In order to form the support layer, there is a rectangular mould made up of a rectangular base and a perimeter frame, the base resting horizontally. A series of components is poured from above, among which there is a base material that sets or hardens when dried, or a chemical binder, mineral particles such as perlite or vermiculite, aggregates, performance modifiers, pigments, etc. When the magnesium oxide is added to the materials already poured into the mould, due to gravity and the small size thereof in relation to the other components, the magnesium oxide particles move in between the other components and are deposited to a greater extent in the lower half of the thickness of the mould. Furthermore, the mould is also subjected to vibration and a drying time. The bottom of the mould, wherein most of the magnesium oxide particles are deposited, has a fine finishing surface, since said particles are small. For this reason, this surface of the support layer is chosen for the subsequent bonding thereof, by gluing, to the decorative layer, since it ensures a larger contact surface for the bonding and in particular, an equilibrium between the shrinking and expansion behaviours.

The reinforcement structure in the form of mesh or fabric can be located within the second thickness of the support layer, which is the one with the lower density, and contributes to the bending of the decorative layer not being transmitted to the support layer, which is preferably a polyvinyl chloride-based layer (PVC).

Preferably, the barrier membrane or layer for reducing or preventing water and moisture intrusion is made of hydrophobic polyurethane. Specifically, it is polyurethane in the form of a varnish, paint or liquid membrane, which when dried creates the layer or membrane.

According to another feature of the invention, the material from which the reinforcement structure is made, formed by meshes (for example like those of a net) or by a fabric, is made of glass fibre. Preferably, the reinforcement structure is made up of glass fibre strands forming a quadrilateral-shaped mesh, for example a patchwork of 10 mm x 10 mm squares. Other embodiments are not ruled out wherein the reinforcement structure is made up of glass-fibre fabrics, the lattice of which enables it to be integrated with the materials of the support layer when there are empty spaces between the threads of the fabric through which the materials of the support layer can cross.

According to another feature of the invention, the density in the first thickness of the support layer is greater than 1000 Kg/m³ and the density in the second thickness of the support layer is less than 1000 Kg/m³. Preferably, the density in the first thickness of the support layer is comprised between 1100 and 1200 Kg/m³, and the density in the second thickness is comprised between 800 and 900 Kg/m³. These densities enable the covering plate to have suitable resistance, to perform well in cold and heat and to be compatible with thicknesses suitable to be used in floor and wall coverings, achieving a balance or equilibrium of performance of the covering without compromising any of the features thereof.

Preferably, the first thickness and the second thickness of the support layer have the same thickness value, comprised between 1.3 and 1.8 mm, being for example about 1.5 mm.

The reinforcement structure made up of meshes or a glass-fibre fabric is preferably arranged centred on the portion of the support layer making up the second thickness, in a plane parallel to the layers of the covering plate.

As for the layer of foam material, it has a density greater than or equal to 25 Kg/m³ and is made of a polymer material selected from the group consisting of an irradiation cross-linked polyethylene (IXPE) foam, ethylene-vinyl acetate (EVA) foam, polyurethane (PU) foam, and polyvinyl chloride (PVC) foam. According to the preferred embodiment, the layer of foam material is made of IXPE.

The adhesive surface contains an adhesive compatible with the polymer material of the layer of foam material. The adhesive may be acrylic- or synthetic-based or based on any other type of adhesive as long as it ensures, in addition to compatibility with the polymer material, sufficient bonding to the surface to be covered, both from the point of view of a mechanical bond and a long-lasting bond. Among the preferred adhesives are those comprising ethyl acetate or an ethylene-vinyl acetate copolymer. Preferably, the main component of the adhesive is ethyl acetate.

The decorative layer is made up of a luxury vinyl tile or floor, known by the acronym LVT, the main component of which is polyvinyl chloride (PVC), since it is made up of several layers of PVC. The PVC-based decorative layer has a thickness comprised between 0.3 mm and 5 mm, more preferably between 0.3 mm and 2 mm, and more preferably between 0.3 and 1.25 mm. LVT is an option for a vinyl tile which has the natural look of stone or ceramic floors, but with the resistance and durability of resistant vinyl flooring. Through authentic images and a surface texture, the PVC of the LVT successfully imitates the patterns of stone and other materials in order to give it an essentially real appearance. In addition to the unparalleled appearance, among the benefits are easy maintenance and resistance to moisture. The density of the decorative layer is comprised between 1450 Kg/m³ and 1550 Kg/m³, and preferably is approximately 1500 Kg/m³.

The support layer may comprise, in addition to magnesium oxide, magnesium sulphate MgSO₄. The embodiment wherein the support layer comprises magnesium oxide with perlite, magnesium sulphate (MgSO₄), wood particles and lithopone is particularly advantageous.

As far as the perforations provided in the layer of foam material are concerned, it is worth mentioning that said perforations communicate with the barrier membrane or layer for reducing or preventing water and moisture intrusion (preferably hydrophobic polyurethane), such that the bottom of each perforation is made up of a portion of this barrier membrane or layer. The perforations preferably have an elliptical or oblong outline on the adhesive surface. Although there are different distribution patterns of the perforations, and based on the fact that the covering plate has a rectangular format, it is preferably foreseen to have a perforation in each area close to a respective corner of the rectangle making up the hidden face of the covering plate, the lateral margins of said rectangle being provided with at least one more perforation located between the perforations in the corners.

According to another preferred embodiment of the invention, at least two of the lateral sides of the covering plate opposite from each other are each configured by a first inclined lateral surface, that encompasses at least the whole part of the lateral side corresponding to the decorative layer, and by a second inclined lateral surface, that encompasses the rest of the lateral side of the covering plate, the intersection of the two inclined lateral surfaces forming a protruding edge in the part of the lateral side corresponding to the support layer, the first inclined lateral surface and the second inclined lateral surface forming an inner angle greater than 70° and less than 180°.

According to this preferred embodiment of the invention, the covering plate has a total of four lateral sides and each one is configured by a first inclined lateral surface encompassing at least the whole part of the lateral side corresponding to the decorative layer, and by a second inclined lateral surface encompassing the rest of the lateral side of the covering plate, the intersection of the two inclined lateral surfaces forming a protruding edge in the part of the lateral side corresponding to the support layer, the first inclined lateral surface and the second inclined lateral surface forming an inner angle greater than 70° and less than 180°.

According to a feature of this preferred embodiment, the second inclined lateral surface, that configures the part of the lateral side of the covering plate encompassing from the protruding edge to the adhesive surface, preferably forms an angle comprised between 75° and 80° measured from the outside of the second inclined lateral surface with a plane parallel to the surface of the hidden face of the covering plate intended to face towards the surface to be covered.

According to another feature of this preferred embodiment, each protruding edge is located in the part of the respective lateral side corresponding to the first thickness of the support layer, the first inclined surface encompassing the whole part of the lateral side of the decorative layer and a part of the lateral part of the first thickness of the support layer. The second inclined surface encompasses the remaining part of the lateral side of the covering plate, which extends from the protruding edge to the adhesive surface.

This preferred embodiment of a covering plate makes it possible to disclose, according to another aspect of the invention, a system for covering vertical and horizontal surfaces, which is also understood as a kit, characterised in that it comprises a plurality of the covering plates like the ones described above, wherein the covering plates satisfy that at least two of the lateral sides opposite from each other of each covering plate of the plurality are each configured by a first inclined lateral surface that encompasses at least the whole part of the lateral side corresponding to the decorative layer, and by a second inclined lateral surface that encompasses the rest of the lateral side of the covering plate, the intersection of the two inclined lateral surfaces forming a protruding edge in the part of the lateral side corresponding to the support layer, the first inclined lateral surface and the second inclined lateral surface forming an inner angle greater than 70° and less than 180°. In addition to the mentioned covering plates, the covering system comprises a package containing an acrylic-based glue for filling in some or all of the perforations of the covering plates.

Advantageously, the covering system further comprises a second package containing sealant silicone for arranging a bead of said silicone in a space between two covering plates arranged facing each other by at least one of the lateral sides thereof with the respective protruding edges thereof in contact, particularly in a joint space between a portion of the second inclined lateral surfaces of the lateral sides of the covering plates and the vertical or horizontal surface to be covered.

In this manner, the covering plates are placed next to each other, touching each other along the protruding edges of the lateral sides thereof and an observer who sees the placed covering panelling will see a completely covered surface, without joints. However, due to the fact that the lateral sides comprise the second inclined lateral surfaces, the silicone bead can be arranged between the covering plates without being visible from the outside, protecting it from condensation. Furthermore, the contact between the edges greatly contributes to making it physically difficult for cleaning liquids or condensation on the decorative surface to enter the space of the joint between covering plates.

Placing the covering plates is very easy since the operator can be guided by the contact produced when the plate which is placed next to another one butts against it, due to the contact of the protruding edges thereof. Furthermore, two covering plates placed in this manner can rotate around the respective edges thereof by which they make contact with each other and this enables the covering plates to be inclined respectively in order to better adapt to the morphology of the surface being covered without the separation joints being noticeable from the outside.

### Brief description of the drawings

The accompanying drawings illustrate by way of non-limiting example some preferred embodiments of the covering plate object of the invention. In said drawings:
Fig. 1 is a cross-sectional view of a first embodiment of the rectangular covering plate object of the invention according to a cutting plane parallel to the direction of the shorter side of the plate;
Fig. 2 is a cross-sectional view of the covering plate of Fig. 1 but according to a cutting plane parallel to the direction of the longer side of the plate;
Fig. 3 is a view like the one shown in Fig. 1 but of a second embodiment of the covering plate object of the invention;
Fig. 4 is a view of the covering plate of Fig. 1 from the visible face thereof;
Fig. 5 is a view of the covering plate of Fig. 1 from the hidden face thereof, wherein the perforations provided on the adhesive surface of the layer of foam material are arranged;
Fig. 6 is the same view as that of Fig. 5 with the difference that some of the perforations have been filled in with acrylic-based glue before arranging the covering plate on the surface to be covered;
Fig. 7 is a view similar to that of Fig. 6 but belonging to another embodiment of the covering plate according to the invention, which has a rectangular format that is more elongated than the plate shown in Fig. 6;
Fig. 8 is a view of the covering plate of Fig. 2 wherein said plate is shown as already placed, covering a portion of a surface which has some irregularities and wherein the perforations of the plate have been filled in with acrylic-based glue; and
Fig. 9 is a detail view of an arrangement of two covering plates according to the invention that are in contact with the respective protruding edges thereof protruding from the lateral sides of the plates facing each other, also showing a bead of sealant silicone arranged in the space between the second inclined lateral surfaces thereof.

### Detailed description of the drawings

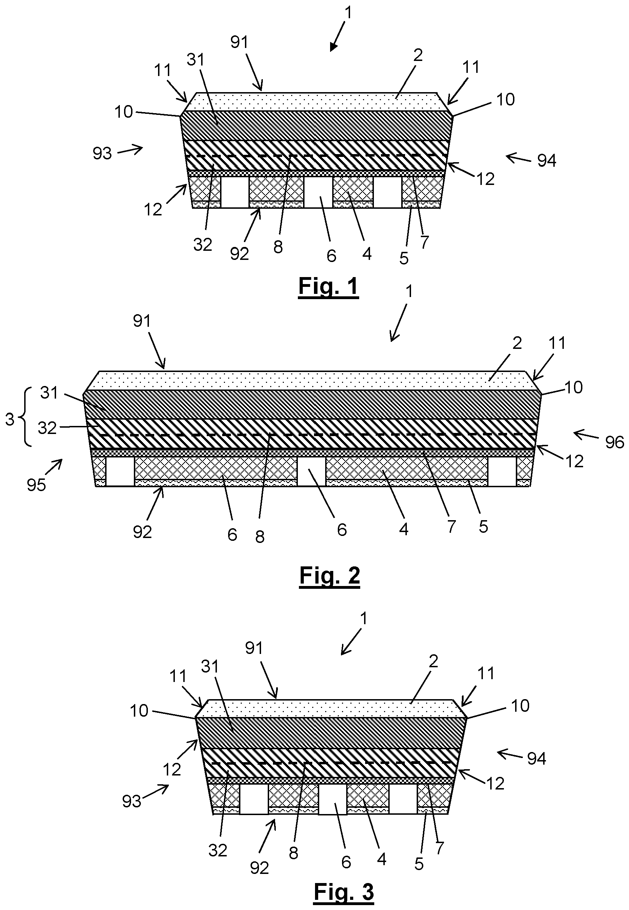

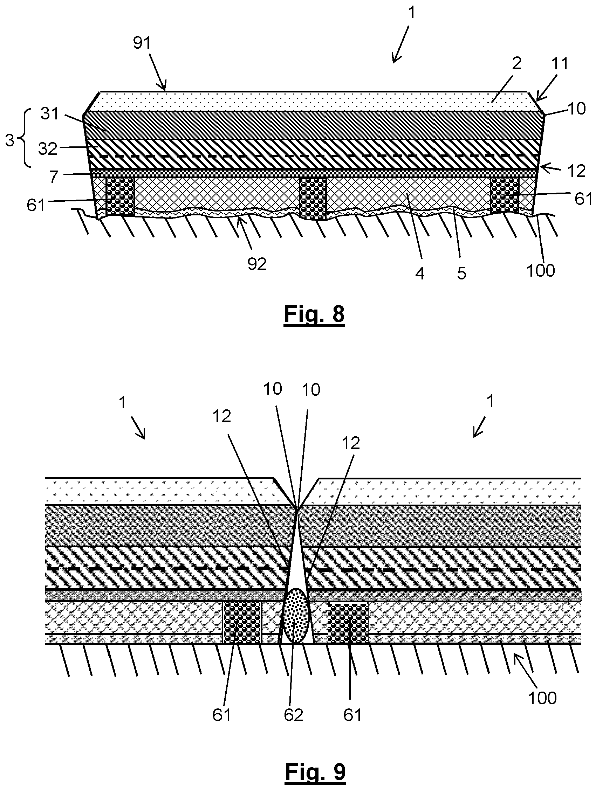

Figs. 1 and 2 schematically show a transverse cross section and a longitudinal cross section of a covering plate 1 with a rectangular format for covering both horizontal and vertical surfaces 100 (see Fig. 8), for example floors or floor coverings and vertical surfaces such as walls.

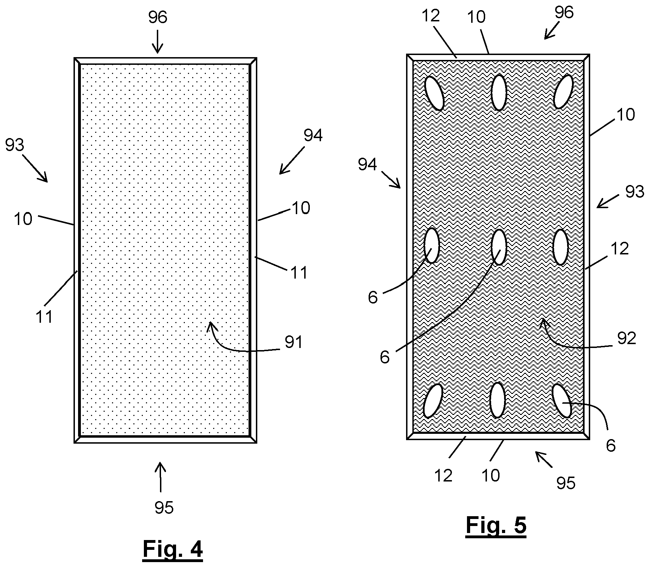

The covering plate 1 shown is made up of the following layers arranged from the visible face 91 of the covering plate 1 (face intended to be exposed to the outside, see Fig. 4) to the hidden face 92 of the plate 1 (face intended to face the surface 100 to be covered, see Figs 5-7):
- an outer decorative layer 2;
- a support layer 3 comprising at least one of the following materials from the group consisting of magnesium oxide or magnesium oxide with perlite and/or vermiculite and/or cellulose;
- a barrier membrane or layer 7 for reducing or preventing water and moisture intrusion, preferably being hydrophobic polyurethane; and
- a layer of foam material 4 with an adhesive surface 5, intended to be placed on the surface 100 to be covered, provided with a plurality of perforations 6.

The support layer 3 has a non-homogeneous density in the thickness thereof, distinguishing a first thickness 31, after the decorative layer 2, and a second thickness 32, between the first thickness 31 and the barrier membrane or layer 7. The density of the support layer 3 in the first thickness 31 is comprised between 1100 and 1200 Kg/m³, while the density in the second thickness 32 is comprised between 800 and 900 Kg/m³.

In order to form the support layer 3, there is a rectangular mould made up of a rectangular base and a perimeter frame with a low height, or the mould is made up of a flat tray (practically without vertical edges), the base or tray resting horizontally. A series of components is poured from above, among which there is a base material that sets or hardens when dried, or a chemical binder, mineral particles such as perlite or vermiculite, aggregates, performance modifiers, pigments, etc., preferred components making up the support layer 3 being perlite (preferably ground perlite), magnesium sulphate (MgSO₄), wood particles and lithopone.

When the magnesium oxide is added to the materials already poured into the mould, due to gravity and the small size thereof in relation to the other components, the magnesium oxide particles move in between the other components and are deposited to a greater extent in the lower half of the thickness of the mould. Furthermore, the mould is also subjected to vibration. The bottom of the mould, wherein most of the magnesium oxide particles are deposited, has a fine finishing surface, since said particles are small. For this reason, this surface of the support layer 3 is chosen for the subsequent bonding thereof, by gluing, to the decorative layer 2. As a result, a support layer 3 is obtained wherein the first thickness 31 and the second thickness 32 with a lower density than the first thickness are distinguished.

Once the support layer 3 has been removed from the mould, the part corresponding to the first thickness 31 will be the one to be bonded to the decorative layer 2, since it is the part that occupied the lower half of the mould which results in having a greater density and a smoother surface finish.

It should be mentioned that the horizontal mould arrangement is also used to introduce a reinforcement structure 8 formed by meshes or a fabric from above, pressing the structure until sinking it approximately a quarter of the total thickness of the support layer 3. The reinforcement structure 8 is formed by meshes, for example, in the shape of quadrilaterals, made of a material such as glass fibre. The reinforcement structure 8 contributes to not transmitting the bending of the decorative layer 2, which usually comprises polyvinyl chloride (PVC), to the support layer 3 when the PVC is subjected to high temperatures or considerable temperature differences on the surface thereof.

The support layer 3, in addition to providing solidity to the covering plate 1, has a high dimensional stability, since if there is moisture or water it does not swell nor do the dimensions thereof vary, and especially magnesium oxide, which has expansion and contraction in very favourable real temperature conditions in order to ensure a good performance, without joint openings between the plates and without some of them pushing on the others and without breaking the sides thereof.

The decorative layer 2 is preferably a luxury vinyl tile or floor (LVT), which is PVC-based, and the density thereof is approximately 1500 Kg/m³. By being bonded to the portion of the first thickness 31 of the support layer 3, with a density between 1100 and 1200 Kg/m³, a balance in the densities of the layers is achieved since the density of the decorative layer 2 made of vinyl is closer to the density of the first thickness 31 than that of the second one.

In terms of thicknesses, a balance between the different layers has also been sought. Thus, the decorative layer 2 preferably has a thickness of about 1 mm when it is made of vinyl, and the support layer 3 has a total thickness of about 3 mm, distributed in 1.5 mm of the first thickness 31 and 1.5 mm of the second thickness 32. The reinforcement structure 8 is located approximately in the middle of the second thickness 32 in a plane more or less parallel to the layer arrangement.

The barrier membrane or layer 7 for reducing or preventing water and moisture intrusion, that can be a varnish or paint made of hydrophobic polyurethane, is then arranged on the face of the support layer 3 corresponding to the second thickness 32 and once the polyurethane has dried, the layer of foam material 4, wherein the plurality of perforations 6 provided may have already been made, is glued.

The layer of foam material 4 has a density greater than or equal to 25 Kg/m³ and preferably it is made of IXPE, i.e., irradiation cross-linked polyethylene foam. The adhesive surface 5 contains an adhesive compatible with the layer of foam material 4 and the basic component thereof is ethyl acetate. Although it has not been shown in the drawings, the covering plate 1 has the adhesive surface 5 covered on the outside with a removable sheet of paper. This removable sheet of paper is removed by the user from the covering plate 1 just before applying the covering plate onto the horizontal or vertical surface 100, thus preventing it from adhering to other surfaces or adopting incorrect positions before the placement of the covering.

Figs. 4 and 5 show the covering plate 1 with a rectangular format, with the four lateral sides 93, 94, 95 and 96 which are each configured by a first inclined lateral surface 11, encompassing at least the whole part of the lateral side corresponding to the decorative layer 2, and by a second inclined lateral surface 12, encompassing the rest of the lateral side, the intersection of the two inclined lateral surfaces 11 and 12 forming a protruding edge 10 of the covering plate 1. In the covering plate 1 shown in Figs. 1 and 2, the protruding edge 10 is located in a part of the support layer 3, particularly in the first thickness 31. However, Fig. 3 shows another embodiment of the covering plate 1 wherein the edge 10 is located at the height of the bonding between the decorative layer 2 and the support layer 3. Figs. 1-3 and 8-9 show that the first inclined lateral surface 11 and the second inclined lateral surface 12 form an inner angle (measured from inside the plate) greater than 70° and less than 180°.

By way of exemplary embodiment, the second inclined lateral surface 12, which configures on each lateral side 93, 94, 95, 96 the part of the covering plate 1 that encompasses from the protruding edge 10 to the adhesive surface 5, forms an angle comprised between 75° and 80° measured from the outside of the second inclined lateral surface 12 with a plane parallel to the surface of the hidden face 92 of the covering plate 1.

It should be mentioned that in the covering plates 1 shown in the drawings, the four lateral sides 93, 94, 95 and 96 are each configured with a first inclined lateral surface 11 and a second inclined lateral surface 12 converging on a protruding edge 10 of the respective lateral side. However, other embodiments of the covering plate 10 envisage that only two lateral sides opposite from each other, 93-94 or 95-96, have said inclined surface configuration.

This configuration of the lateral sides 93, 94, 95 and 96 enables a simple manner of placing adjacent covering plates 1 on the surface 100 to be covered. The covering plates 1 are placed next to each another, touching each other along the protruding edges 10 of the lateral sides 96-95, 94-93 thereof by which they are placed adjacently, and an observer who sees the placed covering panelling will see a completely covered surface, without joints. However, due to the fact the lateral sides 93, 94, 95 and 96 comprise the second inclined lateral surfaces 12, a space is created between said opposite second inclined lateral surfaces 12, the respective protruding edges 10 and a portion of the surface 100 whereon the plates have been placed. A silicone 62 bead will be accommodated in this space, which obviously will have to be placed on the part of the surface 100 that is next to the second inclined lateral surface 12 of the first covering plate 1 that has been placed first, before placing the adjacent second covering plate 1. The silicone 62 bead, or similar sealant material, will not be visible from the outside, but will continue to protect it from undesired condensation on the surface 100. Furthermore, the contact between the protruding edges 10 greatly contributes to physically hindering cleaning liquids or condensation on the decorative layers 2 of the covering plates 1 from accessing the space of the joint between said plates.

In this manner, placing the covering plates 1 is very easy. The operator can be guided by the contact produced when the second covering plate 1, which is placed next to another one that is already placed, butts against it due to the contact of the respective protruding edges 10 thereof. Furthermore, two covering plates 1 placed in this manner can rotate around the respective protruding edges 10 thereof by which they make contact with each other and this enables the plates to be inclined respectively in order to better adapt to the morphology of the surface 100 being covered without the separation joints being noticeable from outside.

Advantageously, the covering plates 1 are for the operator or user who wishes to cover a horizontal or vertical surface 100 by forming part of a covering system or kit which, in addition to a plurality of covering plates 1 for covering the area of the surface 100, comprises a first package which contains an acrylic-based glue 61 for filling in some or all of the perforations 6 of the covering plates 1, and a second package containing sealant silicone 62 for arranging a bead of said silicone 62 in the space described above between the two second inclined surfaces 12, as shown in Fig. 9.

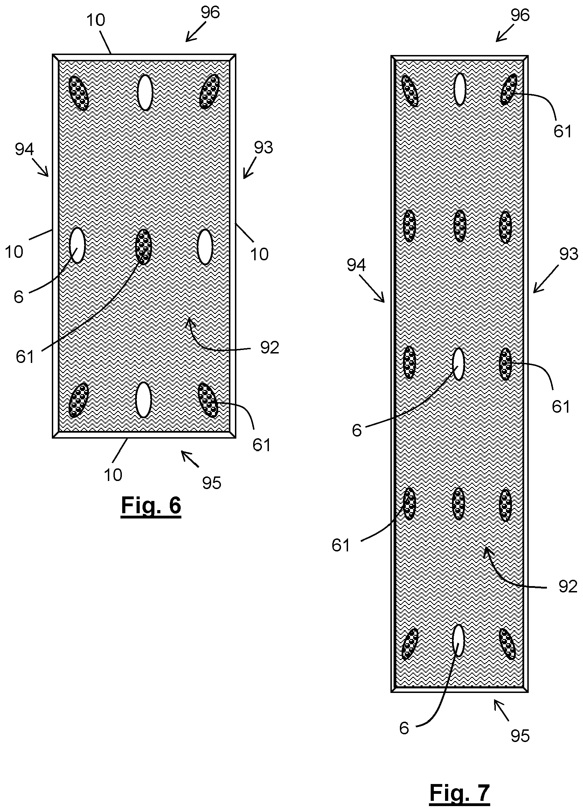

As for the perforations 6 provided in the layer of foam material 4, and therefore also the adhesive surface 5 thereof, it should be mentioned that said perforations 6 communicate with the barrier membrane or layer 7 (made of hydrophobic polyurethane) which reduces or prevents water and moisture intrusion, such that the bottom of each perforation 6 is formed by a portion of this barrier membrane or layer 7. The perforations 6 preferably have an elliptical or oblong outline on the adhesive surface 5, as shown in Figs. 5-7, most of them oriented in the direction of the length of the covering plate 1. Although there are different distribution patterns of the perforations 6, and based on the fact that the covering plate 1 has a rectangular format, a perforation 6 is preferably foreseen in each area close to a respective corner of the rectangle making up the hidden face 92 of the covering plate 1, the lateral margins of said rectangle being provided with at least one more perforation 6 located between the perforations in the corners. Fig. 6 shows, unlike Fig. 5, that some of the perforations 6 have been filled in with acrylic-based glue 61 before arranging the covering plate 1 on the surface 100 to be covered. Fig. 7 shows a format of a covering plate 1 which is more elongated than that of the plate of Fig. 6.

The acrylic-based glue 61 is resistant to the temperature changes to which the floor and wall coverings are usually subjected without decomposing and is practically indefinitely removable, thus being able to be place and remove the covering plate 1 from the surface 100 to be covered without the plate leaving any traces of glue, adhesive or foam material. When the covering plate 1 is to be applied on a vertical surface 100, the perforations 6 will be filled in with said acrylic-based glue 61 so that the plate will adhere better to the surface 100 and resist the weight of the very covering plate 1. In relation to covering horizontal surfaces 100, in most cases it is not necessary to fill in the perforations 6, except in those situations where many people pass through or when the finish of the horizontal surface 100 is porous and has imperfections, as shown in Fig. 8.

## Claims

1. A covering plate (1) for covering vertical and horizontal surfaces (100), comprising at least the following layers arranged in order, from the visible face (91) intended to be exposed to the outside to the hidden face (92) intended to be oriented towards the surface (100) to be covered:
- an outer decorative layer (2);
- a support layer (3) comprising magnesium oxide or magnesium oxide with perlite and/or vermiculite and/or cellulose; and
- a layer of foam material (4) with an adhesive surface (5), intended to be placed on the surface (100) to be covered, provided with a plurality of perforations (6);
wherein the covering plate (1) is **characterised in that** it comprises a barrier membrane or layer (7) for reducing or preventing water and moisture intrusion, arranged between the support layer (3) and the layer of foam material (4), **in that** the support layer (3) has a non-homogeneous density in the thickness thereof, distinguishing a first thickness (31), after the decorative layer (2), and a second thickness (32), between the first thickness (31) and the barrier membrane or layer (7), the density of the support layer (3) in the first thickness (31) being greater than the density in the second thickness (32), and **in that** the support layer (3) is provided with a reinforcement structure (8) made up of meshes or a fabric, the reinforcement structure (8) being located within the second thickness (32) of the support layer (3).

2. The covering plate (1) according to claim 1, **characterised in that** the barrier membrane or layer (7) is made of hydrophobic polyurethane.

3. The covering plate (1) according to any one of the preceding claims, **characterised in that** the material from which the reinforcement structure (8) is made is glass fibre.

4. The covering plate (1) according to claim 3, **characterised in that** the reinforcement structure (8) is arranged centred on the portion of the support layer making up the second thickness (32), in a plane parallel to the layers of the covering plate (1).

5. The covering plate (1) according to any one of the preceding claims, **characterised in that** the density in the first thickness (31) of the support layer (3) is greater than 1000 Kg/m³ and the density in the second thickness (32) of the support layer (3) is less than 1000 Kg/m³.

6. The covering plate (1) according to claim 5, **characterised in that** the density in the first thickness (31) of the support layer (3) is comprised between 1100 and 1200 Kg/m³, and the density in the second thickness (32) is comprised between 800 and 900 Kg/m³.

7. The covering plate (1) according to any one of the preceding claims, **characterised in that** at least two (93, 94) of the lateral sides (93, 94, 95, 96) of the covering plate (1) opposite from each other are each configured by a first inclined lateral surface (11), that encompasses at least the whole part of the lateral side corresponding to the decorative layer (2), and by a second inclined lateral surface (12), that encompasses the rest of the lateral side of the covering plate (1), the intersection of the two inclined lateral surfaces (11, 12) forming a protruding edge (10) in the part of the lateral side corresponding to the support layer (3), the first inclined lateral surface (11) and the second inclined lateral surface (12) forming an inner angle greater than 70° and less than 180°.

8. The covering plate (1) according to claim 7, **characterised in that** the covering plate (1) has four lateral sides (93, 94, 95, 96) and each one is configured by a first inclined lateral surface (11), that encompasses at least the whole part of the lateral side corresponding to the decorative layer (2), and by a second inclined lateral surface (12), that encompasses the rest of the lateral side of the covering plate (1), the intersection of the two inclined lateral surfaces (11, 12) forming a protruding edge (10) in the part of the lateral side corresponding to the support layer (3), the first inclined lateral surface (11) and the second inclined lateral surface (12) forming an inner angle greater than 70° and less than 180°.

9. The covering plate (1) according to claim 7 or 8, **characterised in that** the second inclined lateral surface (12), that configures the portion of the lateral side (93, 94, 95, 96) of the covering plate (1) encompassing from the protruding edge (10) to the adhesive surface (5), forms an angle comprised between 75° and 80° measured from the outside of the second inclined lateral surface (12) with a plane parallel to the surface of the hidden face (92) of the covering plate (1) intended to face towards the surface (100) to be covered.

10. The covering plate (1) according to any one of claims 7 to 9, **characterised in that** each protruding edge (10) is located in the part of a respective lateral side (93, 94, 95, 96) corresponding to the first thickness (31) of the support layer (3), the first inclined lateral surface (11) encompassing the whole part of the lateral side of the decorative layer (2) and a portion of the lateral side of the first thickness (31) of the support layer (3), and the second inclined lateral surface (12) encompassing the remaining part of the lateral side (93, 94) of the covering plate (1), which extends from the protruding edge (10) to the adhesive surface (5).

11. The covering plate (1) according to any one of the preceding claims, **characterised in that** the first thickness (31) of the support layer (3) is comprised between 1.3 and 1.8 mm, and the second thickness (32) of the support layer (3) is comprised between 1.3 and 1.8 mm.

12. The covering plate (1) according to claim 11, **characterised in that** the first thickness (31) measures about 1.5 mm and the second thickness (32) measures about 1.5 mm.

13. The covering plate (1) according to any one of the preceding claims, **characterised in that** the layer of foam material (4) has a density greater than or equal to 25 Kg/m³ and is made of a polymer material selected from the group consisting of an irradiation cross-linked polyethylene (IXPE) foam, ethylene-vinyl acetate (EVA) foam, polyurethane (PU) foam and polyvinyl chloride (PVC) foam.

14. The covering plate (1) according to claim 13, **characterised in that** the adhesive of the adhesive surface (5) comprises ethyl acetate as the main component thereof.

15. The covering plate (1) according to any one of claims 13 to 14, **characterised in that** the layer of foam material (4) is made of irradiation cross-linked polyethylene (IXPE) foam.

16. The covering plate (1) according to any one of claims 13 to 15, **characterised in that** the decorative layer (2) is a luxury vinyl tile or floor, the main component of which is polyvinyl chloride (PVC), which has a density comprised between 1450 Kg/m³ and 1550 Kg/m³ with a thickness comprised between 0.3 mm and 5 mm.

17. The covering plate (1) according to claim 16, **characterised in that** the decorative layer (2) is a luxury vinyl tile or floor that has a thickness comprised between 0.30 and 1.25 mm.

18. The covering plate (1) according to any one of the preceding claims, **characterised in that** the support layer (3) further comprises magnesium sulphate (MgSO₄).

19. The covering plate (1) according to any one of the preceding claims, **characterised in that** the support layer (3) comprises perlite, magnesium sulphate (MgSO₄), wood particles and lithopone.

20. The covering plate (1) according to any one of the preceding claims, **characterised in that** the perforations (6) are communicating with the barrier membrane or layer (7), such that the bottom of each perforation (6) is made up of a portion of barrier membrane or layer (7), and **in that** the perforations (6) have an elliptical or oblong outline on the adhesive surface (5).

21. The covering plate (1) according to claim 20, **characterised in that** the covering plate (1) has a rectangular format, being provided with a perforation (6) in each area close to a respective corner of the rectangle making up the hidden face (92) of the covering plate (1) and the lateral margins of said rectangle being provided with at least one more perforation (6) located between the perforations (6) in the corners.

22. A system for covering vertical and horizontal surfaces (100), **characterised in that** it comprises a plurality of the covering plates (1) according to any one of claims 1 to 21 and wherein at least two (93, 94) of the lateral sides (93, 94, 95, 96) opposite from each other of each covering plate (1) of the plurality are each configured by a first inclined lateral surface (11) encompassing at least the whole part of the lateral side corresponding to the decorative layer (2), and by a second inclined lateral surface (12) encompassing the rest of the lateral side of the covering plate (1), the intersection of the two inclined lateral surfaces (11, 12) forming a protruding edge (10) in the part of the lateral side corresponding to the support layer (3) and the first inclined surface lateral (11) and the second inclined lateral surface (12) forming an inner angle greater than 70° and less than 180°, and also **characterised in that** the covering system comprises a package containing an acrylic-based glue (61) for filling in some or all of the perforations (6) of the covering plates (1).

23. The system for covering vertical and horizontal surfaces (100) according to claim 22, **characterised in that** the system comprises a second package containing sealant silicone (62) for arranging a bead of said silicone in a space between two covering plates (1) arranged facing each other by at least one of the lateral sides (93, 94) thereof with the respective protruding edges (10) thereof in contact, particularly in a joint space between a portion of the second inclined lateral surfaces (12) of the lateral sides (93, 94, 95, 96) of the covering plates (1) and the surface (100) to be covered.
